# EUROPEAN PATENT APPLICATION

(11) **EP 4 293 846 A1**
(43) Date of publication of application: **20.12.2023**
(21) Application number: 22178751.8
(22) Date of filing: 13.06.2022
(51) Int. Cl.: H02G 15/105, H02G 15/04, H02G 1/14, H02G 15/013, H02G 15/18

(54) **CABLE END SEALING ARRANGEMENT FOR A CABLE AND METHOD FOR CONNECTING A METALLIC SHEATH OF A CABLE END OF THE CABLE TO A METALLIC CASING OF THE CABLE END SEALING ARRANGEMENT**

(71) Applicant: NKT HV Cables AB, 371 60 Lyckeby (SE)
(72) Inventor: NORDÉ, Niklas, Karlskrona (SE); JÄDERBERG, Johan, Lyckeby (SE); ANTONISCHKI, Jörn, Fågelmara (SE); AHLBERG, Tomas, Rödeby (SE); HELGH, Allan, Rödeby (SE)
(74) Representative: Kransell & Wennborg KB

(57) **Abstract**

The invention is concerned with a cable end sealing arrangement for a first cable (22) and a method for connecting a metallic sheath of a first cable end of a first cable to a metallic casing of a cable end sealing arrangement. The cable end sealing arrangement (28) comprises a metallic casing (32, 34), a cable entrance (EN) and a first cable end of the first cable inserted into the cable entrance (EN), the cable end comprising layers of cable material (18, 20) including a metallic sheath (18), wherein in an entry section (ESi) of the metallic casing (32, 34), an end of the metallic sheath (18) is separated from the other layers of the first cable material and is in pressurized contact with the metallic casing (32, 34) in an area of overlap between the casing (32, 34) and the metallic sheath (18).

## Description

### TECHNICAL FIELD

The invention relates to electric cables, for instance in relation to high voltages. More particularly, the invention relates to a cable end sealing arrangement for a first cable as well as to a method for connecting a metallic sheath of a first cable end of a first cable to a metallic casing of a cable end sealing arrangement.

### BACKGROUND

The forming of joints between cable ends today typically involves soldering a metallic sheath of a cable to a watertight metallic casing. The metallic sheath is often made of lead, while the casing is typically made of steel.

The problem with such soldering is that it may be made using solder comprising lead. This is not very environmental friendly. It would for this reason be of advantage if the connection between the metallic sheath and the metallic casing is made without soldering.

Soldering is also time consuming and complicated.

There is thus a need for connecting a metallic sheath of a cable with a metallic casing in a cable end sealing arrangement such as a cable joint or cable termination.

### SUMMARY

One object of the invention is therefore to electrically and mechanically connect a metallic sheath of a cable with a metallic casing of a cable end sealing arrangement without the use of soldering, while maintaining water tightness.

This is according to a first aspect achieved through a cable end sealing arrangement for a first cable, the cable end sealing arrangement comprising a metallic casing, a cable entrance and a first cable end of the first cable inserted into the cable entrance, the cable end comprising layers of cable material including a metallic sheath, wherein in an entry section of the metallic casing, an end of the metallic sheath is separated from the other layers of the first cable end and is in pressurized contact with the metallic casing in an area of overlap between the casing and the metallic sheath.

The cable end sealing arrangement may be a cable joint, a cable termination or a cable end sealing. The metallic sheath may be a lead sheath. The metallic casing may in turn be a steel casing. The metallic casing may additionally be a watertight casing.

The cable end sealing arrangement may further comprise a cover surrounding the metallic casing, which cover may with advantage be a heat shrink tube, for instance a plastic heat shrink tube.

The metallic sheath may be an inner sheath, the cable entry section may comprise a first part in which the area of overlap is provided and the first cable end may further comprise an outer sheath that surrounds the inner sheath in a second, different part of the entry section.

The outer sheath may be a plastic sheath. The inner sheath may then stretch beyond the outer sheath in a direction from the cable entrance towards the main section.

The metallic sheath and/or the metallic casing may additionally comprise a ribbed surface in the area of overlap. The ribbed surface may be covered with a coating having an electrical conductivity that is higher than the electrical conductivities of the metallic sheath and/or the metallic casing, thereby ensuring electrical contact between the metallic sheath and the metallic casing. The coating may be of tin, copper, silver or gold.

The cable end sealing arrangement may additionally comprise a metallic sleeve and the metallic sheath may be sandwiched between the metallic sleeve and the metallic casing in the area of overlap for obtaining the pressurized contact with the metallic casing.

The metallic casing may comprise an inlet portion having a first tubular part extending from the cable entrance towards the main section and joined to a second tubular part via an intermedia part shaped as a truncated cone, where the second tubular part has a larger radius than the first tubular part.

The metallic sleeve may in turn comprise a first tubular part aligned with the first tubular part of the inlet portion, an intermediate part shaped as a truncated cone and aligned with the intermediate part of the inlet portion as well as a second tubular part aligned with the second tubular part of the inlet portion. There may be a gap between the intermediate part of the sleeve and the intermediate part of the inlet portion as well as between the first tubular part of the sleeve and the first tubular part of the inlet portion. The second tubular part of the metallic sleeve may on the other hand be placed directly on an attached to the second tubular part of the inlet portion, i.e. without any gaps.

The uncovered and separated metallic sheath may be inserted in the gap between the two first tubular parts and optionally also between the two intermediate parts.

The cable end sealing arrangement may further comprise a radial pressure applying device surrounding the cable entry section in the area of overlap for providing pressurized contact between the metallic sheath and the metallic casing.

The radial pressure applying device may comprise a first and a second plate and a rubber ring, wherein the first and second plates and the rubber ring each have a centre hole encircling the metallic casing and the metallic sheath at the area of overlap. The rubber ring may additionally be squeezed against the metallic casing and metallic sheath by the first and second plates, thereby exerting pressure on the metallic sheath and casing in the area of overlap.

Another aspect is directed towards a method for connecting a metallic sheath of a first cable end of a first cable with a metallic casing of a cable end sealing arrangement for the first cable, the cable end sealing arrangement further comprising an entry section with a cable entrance and the cable end comprising layers of cable material including the metallic sheath, the method comprising:
separating an end of the metallic sheath from the other material layers of the cable end,
placing the end of the metallic sheath in contact with the metallic casing in the entry section, and
applying radial pressure on the entry section for establishing lasting mechanical and electrical contact between the metallic sheath and the metallic casing, where the applied pressure may be static pressure.

The metallic sheath may be an inner sheath originally covered by an outer sheath. In this case the method may additionally comprise uncovering the inner sheath at the first cable end.

The radial pressure may comprise a radial pressure applied inwards towards the centre of the entry section.

As the arrangement may comprise a metallic sleeve that is attached to the casing, the placing of the end of the metallic sheath in contact with the metallic casing in the entry section may comprise a placing of the metallic sheath between the casing and the metallic sleeve. In this case the placing may more particularly be a placing of the metallic sheath in a gap between an inlet portion of the metallic casing and the metallic sleeve.

When there is a metallic sleeve, the radial pressure may additionally comprise a radial pressure applied outwards from the centre of the entry section. In this case it is possible that the metallic sleeve provides a radial pressure that is directed inwards and the metallic casing provides a radial pressure that is directed outwards.

The inwards directed radial pressure may additionally or instead be performed through pressing a rubber ring that encircles the metallic casing and metallic sheath inwards.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The invention will now be described in more detail in relation to the enclosed drawings, in which:
fig. 1 schematically shows a perspective view of an end of a high voltage DC cable,
fig. 2 schematically shows a first embodiment of a cable end sealing arrangement in the form of a cable joint that joins the first cable end to a second cable end of a second cable,
fig. 3 schematically shows an enlarged portion of the cable joint from fig. 2 and where a local cross-section has been made for showing various material layers in the cable joint,
fig. 4 schematically shows an enlarged portion of an area of the local cross-section in fig. 3,
fig. 5 schematically shows a second embodiment of the cable end sealing arrangement in the form of a cable joint that joins the first cable end to a second cable end and being equipped with a radial pressure applying device,
fig. 6 schematically shows an enlarged portion of the cable joint from fig. 5 and where a local cross-section has been made for showing various materials in the cable joint,
fig. 7 schematically shows an enlarged portion of an area of the local cross-section in fig. 6,
fig. 8 schematically shows one realization of the radial pressure applying device, and
fig. 9 shows a number of method steps used in a method for connecting a metallic sheath of a first cable end with a watertight casing of a sealing arrangement for a first cable.

### DETAILED DESCRIPTION

In the following description, for purposes of explanation and not limitation, specific details are set forth such as particular architectures, interfaces, techniques, etc. in order to provide a thorough understanding of the invention. However, it will be apparent to those skilled in the art that the invention may be practiced in other embodiments that depart from these specific details. In other instances, detailed descriptions of well-known devices, circuits and methods are omitted so as not to obscure the description of the invention with unnecessary detail.

The invention is generally directed towards an electric cable such as a Direct Current (DC) cable like a High Voltage Direct Current (HVDC) cable, for instance operated at 100 kV and above. It should here be realized that the invention is not limited to these types of electric cables, but may also be used in relation to for instance Alternating Current (AC) cables and for cables at other voltage levels. Aspects of the present disclosure are concerned with the forming of a joint between two such cables. However, the techniques described herein can also be used for forming cable terminations and cable end sealings.

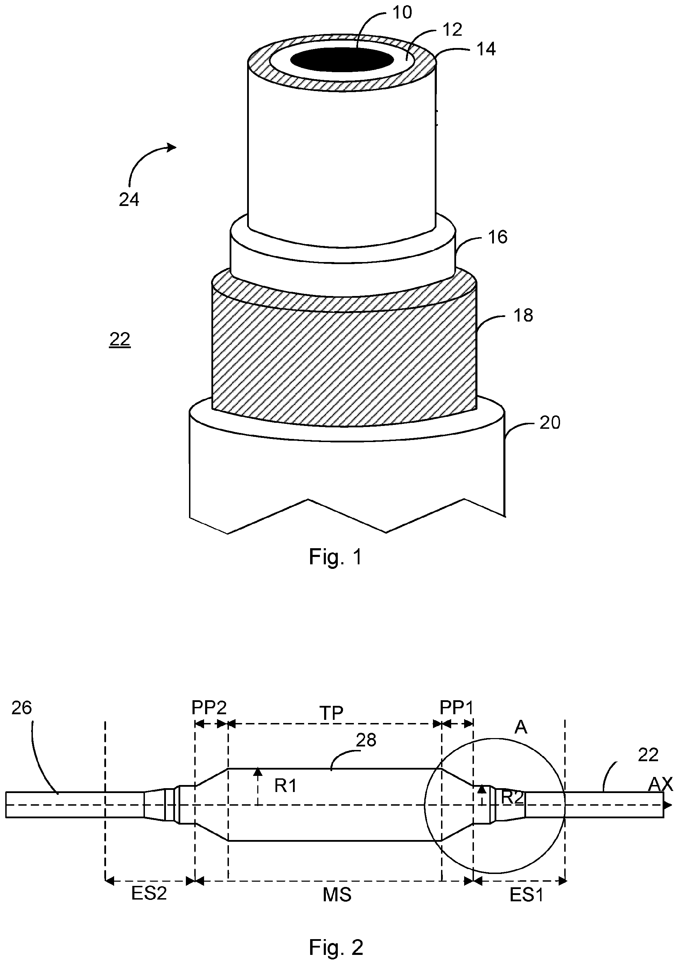

Fig.1 schematically shows an end portion 24 of a first such cable 22 that is to be joined with a corresponding end of a similar second cable. As an example, the cable may be an insulated electric high voltage DC cable 22 and comprises from inside and out: a high voltage DC conductor 10, a polymer-based insulation system 12-16, a metallic inner sheath 18 and a plastic outer sheath 20. In this example the insulating system comprises a first semiconducting layer 12 inside a main insulating layer 14 and a second semiconducting layer 16 outside of the main insulating layer 14. It should here also be realized that the third layer, i.e. the second semiconducting layer, may be omitted. Thereby the cable end 24 comprises layers of cable material 10, 12, 14, 16, 18, 20 including the metallic sheath 18.

The polymer-based insulation system 12-16 may be extruded, moulded, or manufactured in any convenient manner. The main insulating layer 14 may be a crosslinked polyethylene layer, a thermoplastic layer, or a layer of other suitable material.

It should be realized that also other types of insulating systems may be used, such as paper-based insulating systems.

As was mentioned above aspects of the invention is concerned with forming a joint between two cable ends. although also other areas of use are contemplated such as cable terminations and end sealings.

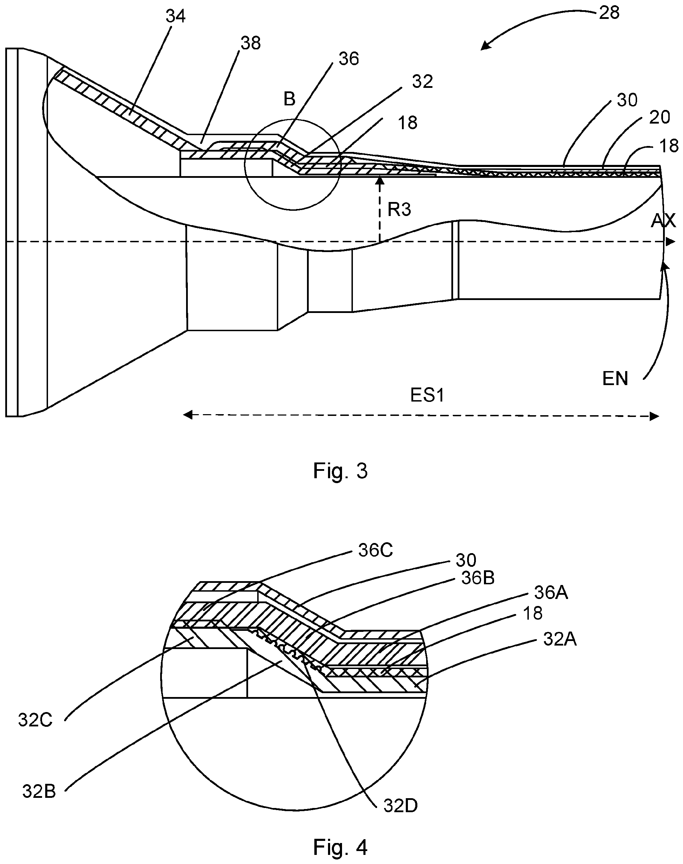

Fig. 2 schematically shows a first embodiment of a cable end sealing arrangement in the form of a cable joint 28 and being connected to the first cable 22 and to the second cable 26. The cable joint 28 is longitudinal and is centred around a longitudinal axis AX. It has a main essentially cylindrical section MS in which the conductors of the first and second cables 22 and 26 are joined, a first cable entry section ES1 into which the first cable end of the first cable 22 is inserted and a second cable entry section ES2 into which a second cable end of the second cable 26 is inserted. The main section MS has a central tubular part TP with a first radius R1 around the longitudinal axis AX and joined with first and second peripheral parts PP1 and PP2, where the first peripheral part PP1 is in turn joined with the first cable entry section ES1 and the second peripheral part PP2 is joined with the second cable entry sections ES2. In the present exemplifying realization, the first and second peripheral parts PP1 and PP2 are shaped as truncated cones and each have a radius that changes in the direction along the longitudinal axis AX towards the corresponding cable entry sectionES1 and ES2 from the first radius R1 to a second radius R2. The first radius R1 is in this case larger than the second radius R2 and consequently the radius of a peripheral part PP1 or PP2 of the main section MS decreases from the radius of the central tubular part TP to the radius of a cable entry section ES1 or ES2. In the figure there is also indicated an area A that is shown in an enlarged view in fig. 3, which area A includes the first cable entry section ES1 for the first cable 22.

Fig.3 schematically shows the enlarged area A including the first cable entry section ES1 in some more detail. In the figure a local cross-section has been made through an upper part of the cable joint 28. Fig. 3 also indicates an area B of the first cable entry section EN1 that is shown in an enlarged view in fig. 4.

As mentioned earlier, the cable joint 28 is elongated and therefore has a longitudinal axis AX around which elements of the sections are centred. The cable joint 28 more particularly comprises a metallic casing 32 and 34 that surrounds and encircles the longitudinal axis AX, which casing 32 and 34 is in turn surrounded by a cover 30. The metallic casing 32 and 34 may be watertight and may additionally be an inner watertight casing (IWC) of steel, such as stainless steel, or a casing of another metal. The cover 30 may in turn be a heat shrink tube, for instance a plastic heat shrink tube.

The metal casing comprises a first inlet portion 32 in the cable entry section ES1 and a main portion 34, where the majority of the main portion 34 is placed in the main section MS of the cable joint 28. The cable joint 28 has a cable entrance EN, which is provided at a first end of the first inlet portion 32 and through which the first cable end 24 is inserted. The first inlet portion 32 is joined to the main portion 34 at a second opposite end, which joining as an example may be made via a site weld 38. The first inlet portion 32 has a first tubular part 32A that extends from the cable entrance towards the main section MS along the longitudinal axis AX. The first tubular part 32A has a third radius R3 around the longitudinal axis AX and is joined to a first end of a second tubular part 32C with the second radius R2 around the longitudinal axis via an intermedia part 32B shaped as a truncated cone. The second radius R2 is larger than the third radius R3. The intermedia part 32B thereby has a radius that changes, and in this case increases, from the third radius R3 to the second radius R2. A second end of the second tubular part 32C of the first inlet portion 32 is in turn joined to a first part of the main portion 34, which first part of the main portion 34 is likewise shaped as a truncated cone, where the radius of this first part of the main portion changes, in the case increases, from the second radius to the third radius R3, which is the radius of a cylindrical part of the main portion 34 as well as the radius of the central part of the main section MS of the cable joint. The cylindrical part of the main portion 34 is then at the other end of the cable joint 28 joined to a third part shaped as a truncated cone, which third part is connected to a second inlet portion of the second cable entry section ES2. The second inlet portion of the second cable entry section ES2 may be shaped in the same way as the first inlet portion 32 of the first cable entry section ES1.

Furthermore, the casing is also connected to a metallic sleeve 36. The sleeve 36 may be made of the same metal as the casing and may comprise a first tubular part 36A that is aligned with the first tubular part 32A of the first inlet portion and an intermediate part 36B, also shaped as a truncated cone, and aligned with the intermediate part 32B of the first inlet portion. Furthermore, the intermediate part 36B of the metallic sleeve is joined to a second tubular part 36C of the metallic sleeve that is aligned with the second tubular part 32C of the first inlet portion. The second tubular part 36C of the metallic sleeve is placed directly on an attached to the second tubular part 32C of the first inlet portion. It may for instance be threaded onto the second tubular part 32C of the first inlet portion. The second tubular part 32 of the sleeve may for this reason be equipped with threads that match with grooves of the second tubular part 32C of the first inlet portion, or vice versa. It can here be mentioned that the cover 32 also covers the metallic sleeve 36.

There is a gap between the intermediate part 36B of the sleeve and the intermediate part 32B of the first inlet portion as well as between the first tubular part 36A of the sleeve and the first tubular part 32A of the first inlet portion. However, there is no gap between the second tubular part 36C of the sleeve and the second tubular part 32C of the first inlet portion.

For a cable joint 28, the cable end 24 of the first cable 22 is inserted into the joint via the cable entrance EN with the conductor 10 being placed in the main section MS, where it is mated with a conductor of the second cable 26. The insulation system 12 - 16 has been removed from the part of the cable end 24 that is placed in the interior of the main section MS and instead the conductor 10 is surrounded by insulation present in the cable joint 28.

In the first entry section ES1 the outer sheath 20 is removed just after the entrance EN and the inner sheath 18 is separated from the rest of the cable layers, i.e. from the insulation system 12 - 16 and the conductor 10 and placed between the metallic casing and the sleeve. The same procedure is followed for the second cable 26.

Thereby the end of the inner sheath 18 is separated from the other material layers 10, 12, 14, 16 and 20 of the first cable end. Through the placing of the inner metallic sheath 18 between the metallic casing and the metallic sleeve there is an area of overlap between the inner sheath 18 and the first inlet portion of the casing, which in this case is an area that covers the first tubular part 32A and the intermediate part 32B of the first inlet portion.

It can furthermore be seen that the area of overlap is provided in a first part of the first cable entry section ES1 where the inner sheath 18 is uncovered and that the outer sheath 20 surrounds the inner sheath 18 in a second, different part of the first cable entry section ES1, which second part is closer to the cable entrance EN than is the first part. Thereby the inner sheath 18 stretches beyond the outer sheath 20 in a direction from the cable entrance EN towards the main section MS, which may be a direction along the longitudinal axis AX.

The end of the inner sheath 18 is placed in the gap between the first tubular part 36A and the intermediate part 36B of the sleeve and the first tubular part 32A and the intermediate part 32B of the first inlet portion of the casing.

The thickness of the inner sheath 18 is adapted to the width of the gap so that the inner sheath 18 is squeezed between the metallic sleeve and the first inlet portion of the casing when being inserted in the gap. The inner sheath 18 is thereby sandwiched between the metallic sleeve 36 and the metallic casing 32 and 34 in the area of overlap. It is more particularly in pressurized contact with the metallic sleeve 36 and the metallic casing 32 and 34 in the area of overlap. The sleeve 36 may thereby be seen as providing pressure in a radial direction inwards towards the longitudinal axis AX, while the first inlet portion 32 of the casing provides a pressure in a radial direction outwards from the longitudinal axis AX. The radial pressures provide a reliable mechanical connection between the sleeve 36, inner sheath 18 and first inlet portion 32. The connection is further improved through the part of the gap being provided between the two intermediate portions 32B and 36B. The gap is thereby angled to the longitudinal axis AX.

The metallic sheath and/or the metallic casing may additionally have a ribbed surface in the area of overlap. A surface of the casing that abuts the inner sheath 18 or a surface of the inner sheath 18 that abuts the casing may in this case be ribbed in order to enhance the mechanical connection. Such a surface may be a surface 32D of the intermedia part 32B of the first inlet portion of the casing possibly together with the surface of the first tubular part 32A. As an alternative or instead it is possible that the surface is a surface of the intermediate part 36B of the sleeve possibly together with a surface of the first tubular part 36A of the sleeve.

The ribbed surface may additionally be covered with a coating or metallic layer having an electrical conductivity that is higher than the electrical conductivities of the metallic sheath and the metallic casing. Thereby a good electrical connection between the inner sheath 18 and the casing is ensured. Such a metallic layer may as an example be of tin, copper, silver or gold.

It can thereby be seen that a reliable mechanical contact is provided combined with a good electrical connection. This is also achieved without the use soldering and thereby the use of environmentally unsafe solder materials, such as lead, is avoided.

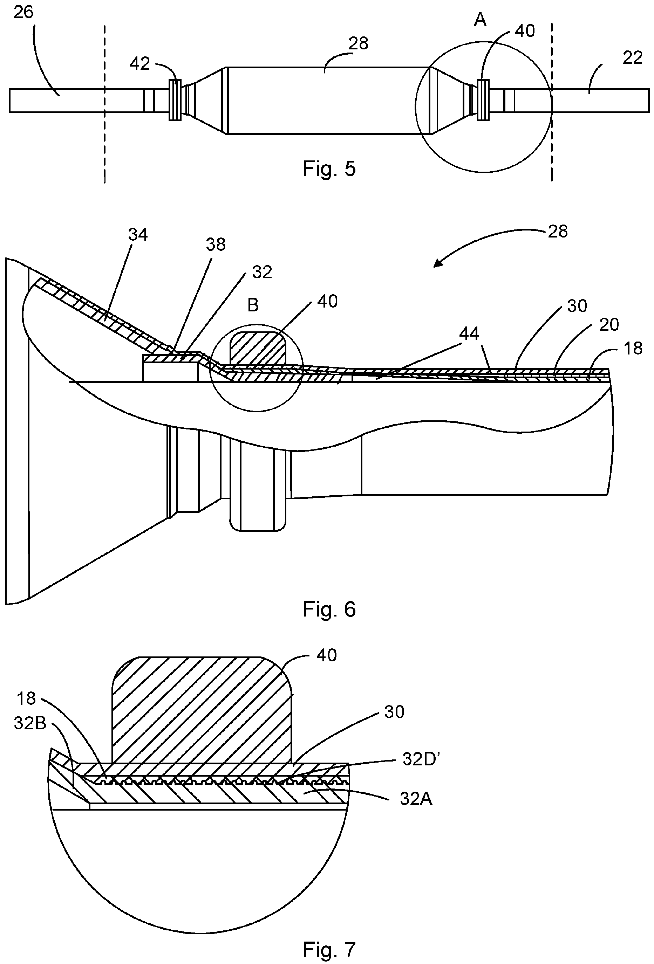

A second embodiment will now be described with reference being made to fig, 5, 6 7 and 8, where fig. 5, 6 and 7 show the same views of the cable joint as fig. 2, 3 and 4 and fig. 8 shows a radial pressure applying device.

In this embodiment the casing has the same realization as in the first embodiment. However, there is no sleeve. Moreover, the inner sheath 18 is only placed adjacent the first tubular part 32A of the first inlet portion. In this embodiment it is placed radially outside the first tubular part 32A and only stretches up to the intermediate part 32B. The area of overlap thus only covers the first tubular part 32A. In order to align the position of the inner sheath 18 with an outer surface of the first tubular part 32 while at the same time providing a smooth exterior on which the cover 30 is applied, the inner sheath 18 may be provided with position adjusting tape 44 on its outer and inner surface between the end of the outer sheath 20 and the first tubular part 32A.

As can also be seen the first radial pressure applying device 40 is placed around the cover 30 in the area of overlap between the casing and the inner sheath 18. Thereby the first radial pressure applying device 40 surrounds the cable entry section in the area of overlap and this is done for providing the pressurized contact between the metallic sheath 18 and the metallic casing 32 and 34.

Also in this case it is possible that a surface of the casing that abuts the inner sheath or a surface of the inner sheath that abuts the casing is ribbed in order to enhance the mechanical connection. Such a surface may in this case be a surface 32D' of the first tubular part 32A of the casing.

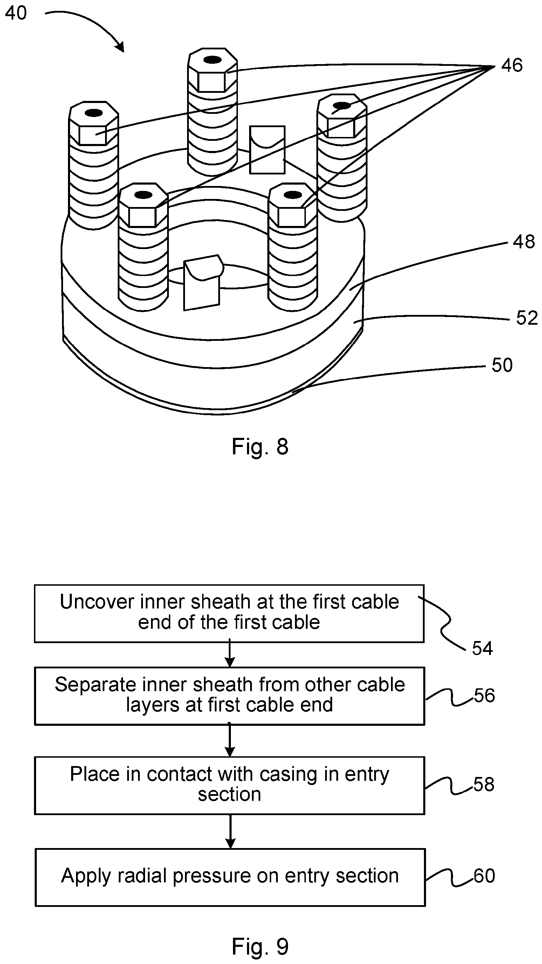

One realization of the first pressure applying device 40 is shown in fig. 8. The pressure applying device 40 may comprise a rubber ring 52 that is placed between a first and a second pressure applying plate 48 and 50, where the plates and the ring are aligned and each have a centre hole that is to encircle the cable joint 28 at the area of overlap. Thereby the holes encircle the casing and sheath at the area of overlap. The device 40 comprises a number of screws or bolts 46 placed along the circumference of the first plate 48 and passing through holes in the first and second plate 48 and 50 and possibly also the rubber ring 52 for mating with corresponding nuts at the second plate 50. When the bolts or screws are mated with the bolts, the plates squeeze the rubber ring 52 and thereby it expands radially inwards into the hole of the ring 52. It is also possible that the circumference of the ring 52 is covered by a sleeve in order to ensure that the radial expansion of the ring does not take place radially outwards. The rubber ring is thereby squeezed against the metallic casing and metallic sheath by the first and second plates 48 and 50, thereby exerting pressure on the metallic sheath and metallic casing in the area of overlap. The pressure applying device 40 thus applies pressure on the cable joint 28, where the pressure on the cable joint 28 is directed radially inwards towards the longitudinal axis AX. As the pressure applying device 40 is placed at the area of overlap, it also exerts pressure on the sheath and casing in the area of overlap. This ensures a stable mechanical contact between the casing and the inner sheath as well as a good electrical connection.

It should be realized that the two embodiments may be combined. It is thus possible that both the sleeve and the pressure applying device are used at the same time in the cable joint.

The description above was made in relation to the first cable 22. It should be realized that the second cable entry section ES2 can be realized in the same way for the second cable 26. Moreover, the description was above made for a cable joint. However, it should be realized that principles outlined above can also be employed for a cable termination or a sealing end. The cable end sealing arrangement may thus as an alternative be a cable termination or a sealing end.

A method for connecting a metallic sheath of a first cable end with a metallic casing of a sealing arrangement for the first cable will now be described with reference being made to a flow chart being depicted in fig. 9.

The method may start with uncovering the inner metallic sheath 18 of the first cable 22 at the first cable end 24, step 54. This may involve removing the outer sheath 20 of the first cable 22 from the first cable end 24. The method also comprises separating an end of the inner metallic sheath 18 from other material layers of the cable 22 at the cable end 24, step 56, i.e. separating the inner sheath from the cable layers inside of it, such as the insulation system 12 - 16 and the conductor 10.

When this has been done, the end of the inner sheath 18 is placed in contact with the metallic casing in the entry section, step 58, where the inner sheath is placed on the casing such that there is an area of overlap between them. Finally, the method comprises applying radial pressure on the first cable entry section for establishing lasting electrical and mechanical contact between the inner sheath and the casing, step 60. The radial pressure may more particularly be static and applied on the area of overlap.

The radial pressure may comprise a radial pressure applied inwards towards the centre of the entry section, i.e. towards the longitudinal axis AX of the arrangement.

The above-mentioned placing step may in one variation involve placing the sheath between the casing and a sleeve that is attached to the casing. In this case the placing may more particularly be a placing of the inner sheath in a gap between an inlet portion of the casing and the sleeve. In this case the radial pressure may also comprise a radial pressure applied outwards from the centre pf the entry section i.e radially out from the longitudinal axis AX. In this case the inwards directed part of the radial pressure may made by the sleeve and the outwards directed part of the radial pressure may be made by the inlet portion of the casing.

In another variation that may be combined with the first mentioned variation, the applying of pressure radially inwards comprises applying a pressure using a radial pressure applying device that encircles the casing in the area of overlap.

While the invention has been described in connection with what is presently considered to be most practical and preferred embodiments, it is to be understood that the invention is not to be limited to the disclosed embodiments, but on the contrary, is intended to cover various modifications and equivalent arrangements. Therefore, the invention is only to be limited by the following claims.

## Claims

1. A cable end sealing arrangement (28) for a first cable (22), the cable end sealing arrangement (28) comprising a metallic casing (32, 34), a cable entrance (EN) and a first cable end (24) of the first cable (22) inserted into the cable entrance (EN), the cable end (24) comprising layers of cable material (10, 12, 14, 16, 18, 20) including a metallic sheath (18), wherein in an entry section (ESi) of the metallic casing (32, 34), an end of the metallic sheath (18) is separated from the other layers of the first cable material (10, 12, 14, 16, 20) and is in pressurized contact with the metallic casing (32, 34) in an area of overlap between the casing (32, 34) and the metallic sheath (18).

2. The cable end sealing arrangement (28) according to claim 1, wherein the metallic sheath (18) is a lead sheath.

3. The cable end sealing arrangement (28) according to claim 1 or 2, wherein the metallic casing (32, 34) is a steel casing.

4. The cable end sealing arrangement (28) according to any previous claim, further comprising a cover (30) that surrounds the metallic casing.

5. The cable end sealing arrangement (28) according to any previous claim, wherein the metallic sheath (18) is an inner sheath, the cable entry section (ESi) comprises a first part in which the area of overlap is provided and the first cable end (24) further comprises an outer sheath (20) that surrounds the inner sheath in a second part of the entry section (ES1).

6. The cable end sealing arrangement (28) according to any previous claim, wherein the metallic sheath and/or the metallic casing comprises a ribbed surface (32D; 32D') in the area of overlap.

7. The cable end sealing arrangement (28) according to claim 6, wherein the ribbed surface (32D; 32D') is covered with a coating having an electrical conductivity that is higher than the electrical conductivities of the metallic sheath (18) and the metallic casing (32, 34).

8. The cable end sealing arrangement (28) according to any previous claim, further comprising a metallic sleeve (36), wherein the metallic sheath (18) is sandwiched between the metallic sleeve (36A, 36B) and the metallic casing (32A, 32B) in the area of overlap for obtaining the pressurized contact with the metallic casing.

9. The cable end sealing arrangement (28) according to any previous claim, further comprising a radial pressure applying device (40) surrounding the cable entry section (ESi) in the area of overlap for providing pressurized contact between the metallic sheath and the metallic casing.

10. The cable end sealing arrangement (28) according to claim 9, wherein the radial pressure applying device (40) comprises a first and a second plate (48, 50) and a rubber ring (52), wherein the first and second plates (48, 50) and rubber ring (52) each have a centre hole encircling the metallic casing (32, 36) and metallic sheath (18) at the area of overlap and the rubber ring (52) is squeezed against the metallic casing (32, 36) and metallic sheath (18) by the first and second plates (48, 50), thereby exerting pressure on the metallic sheath (18) and casing (32, 36) in the area of overlap.

11. The cable end sealing arrangement (18) according to any previous claim, wherein the arrangement is a cable joint, a cable termination or a cable end sealing.

12. A method for connecting a metallic sheath (18) of a first cable end (24) of a first cable (22) with a metallic casing of a cable end sealing arrangement (28) for the first cable (22), the cable end sealing arrangement (28) further comprising an entry section (ES1) with a cable entrance (EN) and the cable end (24) comprising layers of cable material (10, 12, 14, 16, 18, 20) including the metallic sheath (18, the method comprising:
separating (56) and end of the metallic sheath from the other material layers of the cable end (24),
placing (58) the end of the metallic sheath in contact with the metallic casing (18) in the entry section (ES1), and
applying (60) radial pressure on the entry section (ESi) for establishing lasting mechanical and electrical contact between the metallic sheath (18) and the metallic casing (32, 34).

13. The method according to claim 12, wherein the radial pressure comprises a radial pressure applied inwards towards the centre of the entry section (ES1).

14. The method according to claim 12 or 13, wherein the metallic sheath (18) is an inner sheath originally covered by an outer sheath (20) and further comprising uncovering (54) the inner sheath at the first cable end (24).

15. The method according to any of claims 12 - 14, wherein the radial pressure comprises a radial pressure applied outwards from the centre of the entry section (ES1).
